# EUROPEAN PATENT SPECIFICATION

(11) **EP 1 115 021 B1**
(45) Date of publication and mention of the grant of the patent: **31.01.2007**
(21) Application number: 00126647.7
(22) Date of filing: 05.12.2000
(51) Int. Cl.: G02B 21/00

(54) **Method and system for processing scan-data from a confocal microscope**
Verfahren und System zur Verarbeitung von Abtastdaten von einem konfokalen Mikroskop
Procédé et système de traitement de données de balayage d'un microscope confocal

(30) Priority: 31.12.1999 US 476589
(43) Date of publication of application: 11.07.2001
(73) Proprietor: Leica Microsystems CMS GmbH, 35578 Wetzlar (DE)
(72) Inventor: Engelhardt, Johann, 76669 Bad Schönborn (DE); Widzgowski, Bernd, 69221 Dossenheim (DE)
(74) Representative: Reichert, Werner Franz

(56) References cited:
- EP-A- 0 300 571
- EP-A- 0 564 178
- EP-A- 0 592 089
- DE-A- 19 702 753
- US-A- 5 936 764
- BRAKENHOFF G J: "Imaging modes in confocal scanning light microscopy (CSLM)" JOURNAL OF MICROSCOPY, OXFORD, GB, vol. 117, no. PART 2, November 1979 (1979-11), pages 233-242, XP001090819 ISSN: 0022-2720

## Description

This invention relates to a method and a system for processing scan-data form a confocal microscope. More specifically the invention relates to a method an system which enables real-time processing of the scanned data.

In confocal microscopy a specimen is scanned with a focussed laser beam. The focus of the light beam is moved in a section plane of a specimen by tilting two scan mirrors around their axes. The axes of the scan mirrors are perpendicular to each other. For example one scan mirror diverts the laser light in the x-direction and the other scan mirror diverts the laser light in the y-direction. The power of the reflected or the fluorescent light is measured for each scanning point. Each measured value, with respect to power, relates to a x, y and z-position of the specimen. The user achieves a three-dimensional image of the specimen.

An example for a confocal microscope is discolsed in the U.S. Patent 5,804,813 to Wang Jyh Pyng et al., entitled "Differential confocal microscopy". The present invention uses a He-Ne laser as the light source, and the focusing device is a microscope objective lens. The reflected light from the almost completely reflected to an optical detector , which can use photodiodes, avalanche photodiodes, photo multipliers, charge coupled devices (CCDs), or fluorescent screens. The signal is detected by the optical detector and then amplified by a signal amplifier. The amplified signal is recorded by an analog-to-digital converter and then stored by a computer. The computer generates the three-dimensional image by using the intensity of the signal combined with the respective coordinate of the specimen. Before the measurement it is necessary to use the same sample to calibrate the relationship between the variation of signal intensity and the height of the sample.

The ideal scan pattern of the light beam on the surface of a specimen is a meander (to scan one line in the x-direction with a constant y-position, then stop the scan in the x-direction and move the y-position to the next scan line; then this line is scanned in the opposite x-direction and so on). In the real world the meander form does not exist for high scan rates. This is due to the inertia of the galvanometric devices and the scanning mirrors. The real path of the scanning beam has, at scan rates (> 100Hz), a sinusodial form which requires a correction to the ideal path. Several error types may occur, for example, a higher velocity of the scanning point at the turning point of the real path and differing shape of the scan path for different scan directions. In addition to that, the different run and process times for the intensity and the position signal respectively have to be considered.

As disclosed by the prior art above registration and processing of the position signal is normally done with an analog circuit, with computers or digital signal processors (DSP). There are certain disadvantages of signal processing with analog circuits. For example, signal processing can only be carried out with a correction function implemented in the analog circuit. Changes of the correction mechanism, for example change of the scan rate, requires a lot of effort. Moreover the accuracy of analog circuits with respect to mathematical operations reaches a limit at high scan rates. Pixel rates greater than one MHz at a 12 bit accuracy can be achieved only with enormous effort.

Signal processing with a computer is or DSP is possible at low scan rates. Furthermore the signal processing is also flexible since the algorithms for processing can be changed without a major effort. At high scan rates computers or DSP fail due to the lack of real-time ability.

Confocal microscopes having a signal correction are known from documents EP 052 089 A, DE 19 702 753 A and US 5,936,764 A.

It is an object of the present invention to provide a system for processing scan-signals from a confocal microscope in digital form and real-time. Moreover the accuracy of the measurement should be governed solely by the accuracy detectors the accuracy of the digital analog converters. Furthermore, the processing of the scan-signals should be possible at high scanning rates.

This object is achieved by a system which comprises:
at least three different analog signal are generated the by confocal microscope;
at least three analog digital converters each receiving a different analog signal and produces respective digital signals at an early stage; and
a control and processing unit which uses a plurality of programmable devices for processing the digital signals in real-time.

It is also an object of the present invention to provide a confocal microscope with a system for processing scan-signals which allows the processing of the scanned signals at high scanning rates and real time. Additionally, there should be a high flexibility which allows for example an easy alteration of the used algorithms.

This object is accomplished by confocal microscope according to claim 1 which comprises:
a illumination source,
a scanning device with a scanning mirror system
a control and processing unit, which uses a plurality of programmable devices for processing the digital signals in real-time, having at least three input ports and one output port,
a first detector generates analog signals from light reflected from a specimen;
a second detector generates analog signals proportional to the intensity of the light from the illumination source;
an electrical connection providing an analog position signal, generated by the scanning device, to the control and processing unit; and
a first, second and third analog digital converter are located prior to the input ports of the control and processing unit for providing digital signals, generated from the analog signals from the first and second detector and the scanning device.

Another object of the present invention is to provide a method for processing scan-signals from a confocal microscope. The method should enable processing of the analog scan-signals at high scanning rates. Furthermore the method should have a real time ability so that a flexible an loss free data collection is possible.

This object is achieved by a method according to claim 8 which comprises the following steps:
generating at least three different analog signals by the confocal microscope wherein a first signal represents light reflected from a specimen, a second signal represents an illumination reference and a third signal represents a position on the specimen;
converting each analog signal with a separate analog digital converters into respective digital signals;
providing the digital signals to a control and processing unit which uses at least one of programmable devices for processing the digital signals in real-time;
buffering the digital position signals in a line-buffer of the control and processing unit;
correcting the first digital signal for intensity fluctuations of the second digital signal for generating a corrected digital detection signal; and
combining a specific digital position signal with a specific digital detection signal.

An advantage of the inventive method and the system is that the position signal of the focused scanning beam and signals from the detectors (scanning beam and reference beam) are digitized at a very early stage. Processing of the data is done mainly in digital form with the use of a programmable control and processing unit which is realized by a programmable digital circuit (for example FPGA, Field Programmable Gate Array). Correction parameters can be used online, which would make downstream image processing much easier or obsolete. The accuracy of the device is governed solely by the accuracy of the detectors and the analog digital converters. Analog digital converters with a big processing band width are available at reasonable costs. The position correction function can be programmed with respect to the requirements resulting from the measurement conditions. An alteration of the position correction function can be done online. The dynamic pixel accumulation records several measurement values during the scan of an image pixel and accumulates the data in a suitable buffer. The dynamic pixel accumulation allows a wide dynamic range form a few Hz to some MHz (right now the upper limit is 250 MHz) this make high scanning rates possible.

Pixel accumulation calls for a simple analog circuit without giving up the high resolution and the wide dynamic range. Despite the fact, that the analog digital converters enable only sampling of intensity signals from a narrow band of signal heights, the scanning several times and the pixel accumulation result in a theoretical unlimited bit resolution.

With the pixel accumulation the electronic processing is adjusted in time to the scan-velocity. Thereby, during a slow scan, the registered intensity signals are accumulated until the scanning beam has reached the next pixel element of the object. The pixel rate can be adjusted to the internal processing rate by pixel accumulation.

The advantages of pixel accumulation are analog to line accumulation (multiple sequential scan of one scan line and addition of the intensity data in a suitable buffer arrangement). Moreover, differences in the line-scan in one direction from the line scan in the other direction are averaged by line accumulation. In case of resonant galcanometers for the x-scan, a pixel accumulation is not possible so that line accumulation has to be used only.

A further advantage of the system is its real time ability, which repeats predetermined process steps with an accuracy up to nanoseconds. The inventive system fulfills the requirements of flexibility and real time ability. There is no need for buffer memories, since a computer controlled data recording is not used. The real time ability of the inventive system guaranties a loss free and flexible data collection with the highest, at present possible, scan rates.

Computers can also be programmed, but they are controlled by interrupts so that a running process have to be ended before further data processing can go on. This is, with respect to the present invention, also not considered a real-time ability. The present invention has the ability of a high flexibility with respect to data process changes and real-time processing of data.

The subject matter of the invention is described with reference to the embodiments shown in the drawings.
Fig. 1;shows a schematic illustration of a confocal microscope and a system for achieving three dimensional specimen images;
Fig. 2 is an embodiment of a process unit;
Fig. 3 shows an ideal path of the focus of the scanning beam; and
Fig. 4 shows an actual path of the focus of the scanning beam.

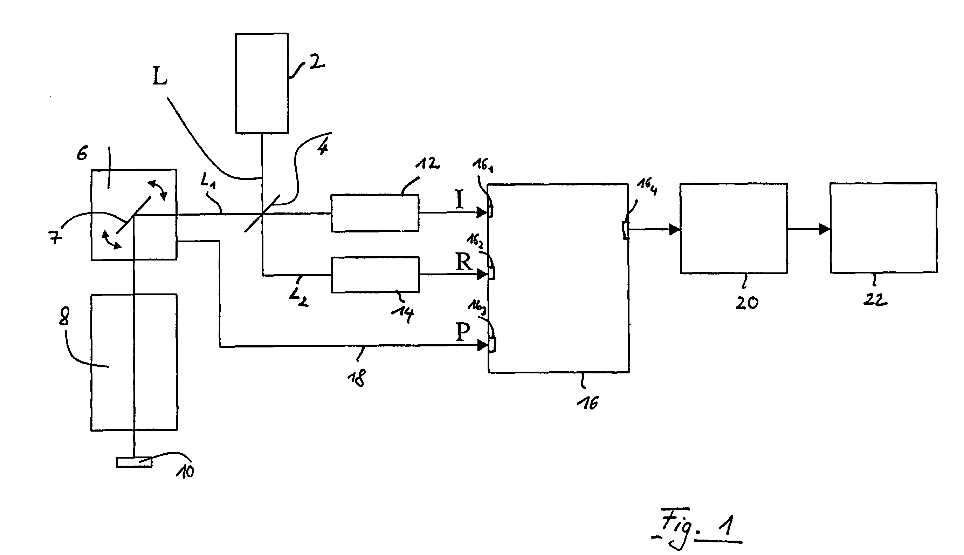

Fig. 1 shows a schematic illustration of a confocal microscope and a system for achieving three dimensional specimen images. An illumination system 2 generates a light beam L. A beam splitter 4 divides the incident light beam L into a first path L₁ and into a second path L₂. With the first path L₁ the light from the illumination system is directed to a scanning device 6. The scanning device 6 comprises a scanning mirror system 7 which is moveable such, that the light of the first path L₁ is scanned across a specimen 10. Before the light of the first path L₁ reaches the specimen 10 the light passes an optical system 8. The light reflected from the specimen travels on12 the first path L₁ back to the beam splitter 4. After the beam splitter 4 a first detector 12 is positioned, which receives the light reflected from the specimen 10. The first detector 12 converts the received light into an first electrical signal I which is proportional to the intensity of the received light received form the specimen. A second detector 14 receives directly via the second path L₂ the light from the illumination system 2. As the first detector 12 the second detector 14 converts the received light into an second electrical signal R which is proportional to the intensity of the received light, which is a illumination reference. A control and processing unit 16 is provided which has a first second and third input port 16₁, 16₂ and 16₃. The first electrical signal I is fed to the first input port 16₁ and the second electrical signal R is fed to the second input port 16₂. The third input port 16₃ receives via an electrical connection 18 a position signal P which is generated in the scanning device 6. The disclosed embodiment describes three different analog signals I, R and P which are fed to the control and processing unit 16. With the use of multiplexers (not shown) more than three different signal can be provided to and processed with the control and processing unit 16.

The control and processing unit 16 converts the incoming analog signals (first electrical signal I, second electrical signal R and position signal P) which may be distorted and disrupted in into corrected digital signals. Via an exit port the digital signals are sent to a computer 20 which may carry out some image processing. A conventional display 22 is used to show the image of the specimen 10 to an user of the system.

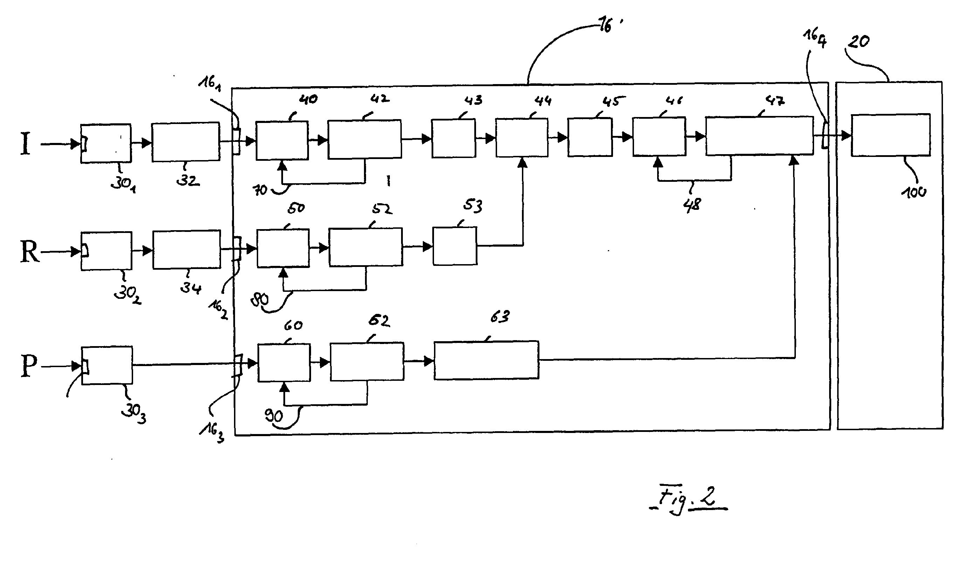

An embodiment of the control and processing unit 16 is shown in Fig. 2. The control and processing unit 16 is realized with a plurality of FPGA-units (Field Programmable Gate Array). The first analog electrical signal I enters a first analog-digital converter 30₁,the second analog electrical signal R enters a second analog-digital converter 30₂ and the analog position signal P enters a third analog-digital converter 30₃. From the first analog-digital converter 30₁ and from the second analog-digital converter 30₂ the digitized signal are fed to a first and a second delay-modules 32 and 34 respectively which are used to carry out run-time differences. The use of the first and second delay-module 32 an 34 is important since the first and second electric signal I and R have a processing time which is different to the position signal P. This means that the reaction time of the scanning mirror system 7 is delayed due to its inertia. The delay modules eliminate the possible error due to its own processing time and reaction time differences. The output of the first and second delay module 32 and 34 is fed to the first and second input port 16₁ and 16₂ respectively of the control and processing unit 16. Here the digital signal from the first delay-module 32 is sent to a first adder 40 followed by a first buffer 42. There is a loop 70 between the first buffer42 and the first adder 40 to enable a pixel accumulation. From the first buffer 42 the data are sent to a first look-up-table 43 which carries out a log-conversion of the data. From the second delay-module 34 the digital signal is sent to a second adder 50 followed by a second buffer 52. There is a loop 80 between second the buffer 52 and the second adder 50 to enable a pixel accumulation. From the second buffer 52 the data are sent to a second look-up-table 53 which carries out a log-conversion of the data. From the third analog-digital converter 303 the positional data are sent to a third adder 60 followed by a third buffer 62. There is a loop 90 between the third buffer 62 and the third adder 60 to enable a pixel accumulation. From the third buffer 62 the data are sent to an address look-up-table 63 which carries out correction of the position data with respect to the scan along the x-direction. In order to obtain the correct digital data for the position of the scan beam there may be different look-up tables, one for each direction of the scan in the x-direction.

From the first look-up-table 43 and the second look-up-table 53 the data are fed to a calculation device 44. The calculation device 44 subtracts the data representative of the first electrical signal I from the data representative of the second electrical signal R. This enables a correction of the short term intensity fluctuations of the laser output signal. The data from the calculation device 44 are fed to a fourth look-up-table 45, which carries out a conversion of the data with respect to the basis e. The result of this conversion is that the data are available as the quotient of data representing the first electrical signal I and data representing the second electrical signal R. The data from the forth look-up table 45 are fed to a forth adder and from there to a line buffer 47 which correlates a specific digital position signal with a specific digital detection signal. There is also a loop 48 between the line buffer 47 and the forth adder 46 to enable a line accumulation. The position data are from the address look-up-table 63 are sent also to the line buffer 47. From the line buffer 47 the corrected digital signals are sent to via the exit port 164 of the processing unit 16 to a data input port 100 of the computer 20.

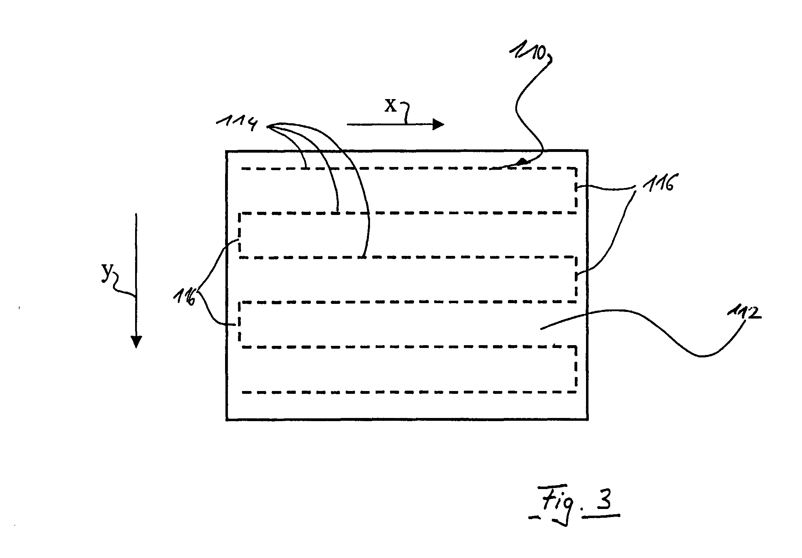

In most cases the devices used to tilt the scanning mirror system 7 are galvanometers. In general, both resonant and non-resonant galvanometers are used. The resonant galvanometers are very fast (approx. several kHz), but they are not as exact as the non-resonant galvanometers, which are much slower. Fig. 3 shows and ideal path 110 of the focus of the scanning beam across specimen area of interest 112. The dashed line represents the ideal path 110. The ideal path 110 comprises a plurality of linear movements 114 of the focused beam in a direction x of the specimen area 112. The linear movements 114 are separated by a constant line feed 116 which has a direction y, perpendicular to the linear movements 114. In other words the ideal path 110 of the focus of the scanning beam would be a back and forth pattern of parallel lines in the direction x which are separated by the constant line feed 116 in the direction y. The line feed 116 is done by tilting the y-mirror (not shown), thereby moving the focus of the scanning beam to the next line. This next line is scanned with the x-mirror (not shown) followed by another line feed 116 and so on until the whole specimen area 112 is scanned.

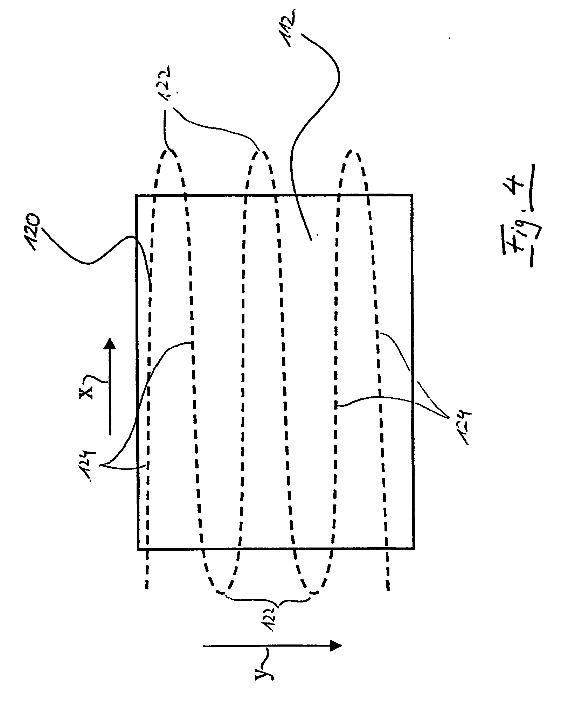

The ideal path 110 as shown in Fig. 3 can not be achieved, because of the inertia of the mirrors and the and the moving galvanometer elements. Actually, a real path 120 across the specimen area of interest 112 is shown in Fig. 4. The form of the real path is sinusoidal. According to the differences between the ideal path 110 and the actual path 120 a correction of this difference is necessary. Furthermore, it has to be considered that the velocity of the focus of the scanning beam in the direction x increases at turning points 122 compared to linear regions 124 of the sinusoidal curve. In order to run a microscope at considerable high scanning rates, a real time processing unit (field programmable gate array, FPGA) is used to correct and process the detector and position signals (for example, to provide a correction for the differences as shown in Fig. 3 and Fig.4).

The FPGA provides also a correction in the case of an asymmetric scan path (the scan path in the x-direction differs from the scan path in the opposite direction). This requires a different correction for the scan path in the x-direction and another correction for the scan path in the opposite direction. In other words, the position signal has to be corrected with respect to the different paths of the scanning beam across the object.

The invention has been described in detail with particular reference to certain preferred embodiments thereof, but it will be understood that variations and modifications can be effected within the scope of the invention as claimed.

### PARTS LIST

- 2: illumination system
- 4: beam splitter.
- 6: scanning device
- 7: scanning mirror system
- 8: optical system
- 10: specimen
- 12: first detector
- 14: second detector
- 16: control and processing unit
- 16₁: first input port
- 16₂: second input port
- 16₃: third input port
- 16₄: exit port
- 18: electrical connection
- 20: computer
- 22: display
- 30₁: first analog-digital converter
- 30₂: second analog-digital converter
- 30₃: third analog-digital converter
- 32: first delay-module
- 34: second delay-module
- 40: first adder
- 42: first buffer
- 43: first look-up-table
- 44: calculation device
- 45: forth look-up-table
- 46: forth adder
- 47: line buffer
- 48: loop1
- 50: second adder
- 52: second butter
- 53: second look-up-table
- 60: third adder
- 62: third buffer
- 63: address look-up-table
- 70: loop
- 80: loop
- 90: loop
- 100: computer
- 110: ideal path
- 112: specimen area of interest
- 114: linear movement
- 116: line feed
- 120: real path
- 122: turning point
- 124: linear region
- I: first electrical signal
- R: second electrical signal
- P: position signal
- L: light beam
- L₁: first path
- L₂: second path
- X: scan direction
- Y: scan direction

## Claims

1. A confocal microscope with system for processing scan-signals from the confocal microscope, comprising: an illumination system (2), directing a light beam onto a specimen (10), a control and processing unit (16) and a scanning device (6); wherein
the control and processing unit (16) has a plurality of programmable devices for real-time processing, at least three input ports (16₁, 16₂, 16₃) and one output port (164);
a first detector (12) receives light from the specimen (10) and generates an analog electrical signal, which is fed to a first analog-digital converter (30₁) to generate a first digital signal;
a second detector (14) receives light from the illumination system (2) and generates a second analog electrical signal, which is fed to a second analog-digital converter (30₂) to generate a second digital signal;
the scanning device (6) generates a position signal which is fed to a third analog-digital converter (30₃) to generate a digital position signal;
the first and the second analog-to-digital converters (30₁,30₂) outputting signal are fed to the first and second input ports (16₁, 16₂) of the control and processing unit (16) via a first and second delay-module (32 an 34) and the third analog-to-digital converter (30₃) outputting signal is connected to the third input port (I6₃) of the control and processing unit (16); and
the control and processing unit (16) comprises a calculation unit arranged to correct the first digital signal for intensity fluctuations by subtracting the second digital signal from the first digital signal and thereby generating a corrected digital detection signal, and a line buffer for buffering the digital position signal and said line buffer being arranged to combine the corrected digital detection signal with the digital position signal for outputting the combined signal via the one output port.

2. The confocal microscope as recited in claim 1 wherein the plurality of programmable device are field programmable gate arrays.

3. The system as recited in claim 1 wherein the control and processing unit (16) comprises a address look up table (63) to provide a correction for the position signal (P).

4. The confocal microscope as recited in claim 3 wherein the scanning device (6) comprises a scanning mirror system (7) defining a first scan path on a specimen surface in a x-direction a second scan path in an opposite direction x-direction, wherein the first and the second scan path differ with respect to time, and the correction of the position signal (P) is chosen with respect to the scan direction.

5. The confocal microscope as recited in claim 3 wherein a first look up table (43) carries out a log conversion of the signal received from the first analog-digital converter (30₁).

6. The confocal microscope as recited in claim 3 wherein a second look up table (53) carries out a log conversion of the signal received from the second analog-digital converter (30₂).

7. The confocal microscope as recited in claim 1 further comprising a computer (20) for receiving a correlated specific digital position signal and the digital detection signal, the computer having a display (22) for providing an image of the specimen (10).

8. A method for processing scan-signals from a confocal microscope, the method comprising:
generating at least three analog signals (I, P, R), a first signal (I) the light received from a specimen (10), a second signal (R) corresponding to an illumination reference of the confocal microscope and a position signal (P) corresponding to a position signal on the specimen (10);
digitizing the first signal, the second signal and the position signal to provide digital signals comprising a first digital signal, a second digital signal and a digital position signal, respectively;
providing a control and processing unit (16) receiving the digital signals at the first, second and third input ports (16₁, 16₂, 16₃) respectively, the control and processing unit (16) having a plurality of programmable devices for real-time processing of the digital signals;
buffering the digital position signals in a line-buffer of the control and processing unit (16);
correcting the first digital signal (I) for intensity fluctuations by subtracting the second digital signal (R) from the first digital signal (I) and thereby generating a corrected digital detection signal;
combining the corrected digital detection signal with the digital position signal to provide a combined signal; and outputting the combined signal via one output port.

9. The method as recited in claim 8 wherein providing the control and processing unit (16) having the plurality of programmable devices wherein the programmable devices are field programmable gate arrays.

10. The method as recited in claim 8 further comprising providing correction for the digital position signal (P) by using an address look up table (63) in the control and processing unit (16).

11. The method as recited in claim 10 wherein providing correction of the digital position signal is accomplished by correcting a first scan path on a specimen surface in a x-direction and a second scan path in an opposite direction x-direction.

12. The method as recited in claim 8 wherein a first look-up table (43) carries out a log conversion of the first digital signal (I).

13. The method as recited in claim 8 wherein a second look-up table (53) carries out a log conversion of the second digital signal (R).

14. The method as recited in claim 8 further comprising feeding the combined digital position signal and the digital detection signal to a computer (20); and displaying an image of the scanned specimen (10).

## Patentansprüche

1. Konfokales Mikroskop mit System zum Verarbeiten von Abtastsignalen von dem konfokalen Mikroskop, umfassend: ein Beleuchtungssystem (2), das einen Lichtstrahl auf eine Probe (10) lenkt, eine Steuer- und Verarbeitungseinheit (16) und eine Abtasteinrichtung (6); wobei
die Steuer- und Verarbeitungseinheit (16) mehrere programmierbare Einrichtungen zur Echtzeitverarbeitung, mindestens drei Eingabeports (16₁, 16₂, 16₃) und einen Ausgabeport (16₄) aufweist;
ein erster Detektor (12) Licht von der Probe (10) empfängt und ein analoges elektrisches Signal erzeugt, das einem ersten Analog-Digital-Umsetzer (30₁) zugeführt wird, um ein erstes digitales Signal zu erzeugen;
ein zweiter Detektor (14) Licht von dem Beleuchtungssystem (2) empfängt und ein zweitens analoges elektrisches Signal erzeugt, das einem zweiten Analog-Digital-Umsetzer (30₂) zugeführt wird, um ein zweites digitales Signal zu erzeugen; die Abtasteinrichtung (6) ein Positionssignal erzeugt, das einem dritten Analog-Digital-Umsetzer (30₃) zugeführt wird, um ein digitales Positionssignal zu erzeugen;
wobei der erste und der zweite Analog-Digital-Umsetzer (30₁, 30₂) ein Signal ausgeben, das dem ersten und zweiten Eingabeport (16₁, 16₂) der Steuer- und Verarbeitungseinheit (16) über ein erstes und zweites Verzögerungsmodul (32 und 34) zugeführt wird, und das Ausgangssignal des dritten Analog-Digital-Umsetzers (30₃) an den dritten Eingabeport (16₃) der Steuer- und Verarbeitungseinheit (16) angelegt ist; und
die Steuer- und Verarbeitungseinheit (16) eine Berechnungseinheit umfaßt, die so ausgelegt ist, daß sie das erste digitale Signal hinsichtlich Intensitätsfluktuationen korrigiert durch Subtrahieren des zweiten digitalen Signals von dem ersten digitalen Signal und **dadurch** ein korrigiertes digitales Detektionssignal erzeugt, und einen Zeilenpuffer zum Puffern des digitalen Positionssignals und wobei der Zeilenpuffer so ausgelegt ist, daß er das korrigierte digitale Detektionssignal mit dem digitalen Positionssignal kombiniert zum Ausgeben des kombinierten Signals über den einen Ausgabeport.

2. Konfokales Mikroskop nach Anspruch 1, wobei die mehreren programmierbaren Einrichtungen FPGA (field programmable gate arrays) sind.

3. Konfokales Mikroskop nach Anspruch 1, wobei die Steuer- und Verarbeitungseinheit (16) eine Adressennachschlagetabelle (63) umfaßt zum Bereitstellen einer Korrektur für das Positionssignal (P).

4. Konfokales Mikroskop nach Anspruch 3, wobei die Abtasteinrichtung (6) ein abtastendes Spiegelsystem (7) umfaßt, das einen ersten Abtastweg auf einer Probenoberfläche in einer X-Richtung und einen zweiten Abtastweg in einer entgegengesetzten Richtung zur X-Richtung definiert, wobei der erste und der zweite Abtastweg bezüglich Zeit differieren, und die Korrektur des Positionssignals (P) bezüglich der Abtastrichtung gewählt wird.

5. Konfokales Mikroskop nach Anspruch 3, wobei eine erste Nachschlagetabelle (43) eine log-Konvertierung des von dem ersten Analog-Digital-Umsetzer (30₁) empfangenen Signals durchführt.

6. Konfokales Mikroskop nach Anspruch 3, wobei eine zweite Nachschlagetabelle (53) eine log-Konvertierung des von dem zweiten Analog-Digital-Umsetzer (30₂) empfangenen Signals durchführt.

7. Konfokales Mikroskop nach Anspruch 1, weiterhin umfassend einen Computer (20) zum Empfangen eines korrelierten spezifischen digitalen Positionssignals und des digitalen Detektionssignals, wobei der Computer ein Display (22) zum Liefern eines Bilds der Probe (10) aufweist.

8. Verfahren zum Verarbeiten von Abtastsignalen von einem konfokalen Mikroskop, wobei das Verfahren folgendes umfaßt:
Erzeugen von mindestens drei analogen Signalen (I, P, R), wobei ein erstes Signal (I) dem von einer. Probe (10) empfangenen Licht entspricht, ein zweites Signal (R) einer Beleuchtungsreferenz des konfokalen Mikroskops entspricht und ein Positionssignal (P) einem Positionssignal auf der Probe (10) entspricht;
Digitalisieren des ersten Signals, des zweiten Signals und des Positionssignals, um digitale Signale bereitzustellen, die ein erstes digitales Signal, ein zweites digitales Signal bzw. ein digitales Positionssignal umfassen;
Bereitstellen einer Steuer- und Verarbeitungseinheit (16), die die digitalen Signale am ersten, zweiten bzw. dritten Eingabeport (16₁, 16₂, 16₃) empfängt, wobei die Steuer- und Verarbeitungseinheit (16) mehrere programmierbare Einrichtungen zur Echtzeitverarbeitung der digitalen Signale aufweist;
Puffern der digitalen Positionssignale in einem Zeilenpuffer der Steuer- und Verarbeitungseinheit (16) ;
Korrigieren des ersten digitalen Signals (I) hinsichtlich Intensitätsfluktuationen durch Subtrahieren des zweiten digitalen Signals (R) von dem ersten digitalen Signal (I) und dadurch Erzeugen eines korrigierten digitalen Detektionssignals;
Kombinieren des korrigierten digitalen Detektionssignals mit dem digitalen Positionssignal, um ein kombiniertes Signal bereitzustellen; und Ausgeben des kombinierten Signals über einen Ausgabeport.

9. Verfahren nach Anspruch 8, wobei der Schritt des Bereitstellens der Steuer- und Verarbeitungseinheit (16) mehrere programmierbare Einrichtungen umfaßt, wobei die programmierbaren Einrichtungen FPGAs (field programmable gate arrays) sind.

10. Verfahren nach Anspruch 8, weiterhin umfassend das Bereitstellen einer Korrektur für das digitale Positionssignal (P) unter Verwendung einer Adressennachsehlagetabelle (63) in der Steuer- und Verarbeitungseinheit (16).

11. Verfahren nach Anspruch 10, wobei das Bereitstellen einer Korrektur des digitalen Positionssignals bewerkstelligt wird durch Korrigieren eines ersten Abtastwegs auf einer Probenoberfläche in einer x-Richtung und eines zweiten Abtastwegs in einer entgegengesetzten Richtung zu der x-Richtung.

12. Verfahren nach Anspruch 8, wobei eine erste Nachschlagetabelle (43) eine log-Konvertierung des ersten digitalen Signals (I) ausführt.

13. Verfahren nach Anspruch 8, wobei eine zweite Nachschlagetabelle (53) eine log-Konvertierung des zweiten digitalen Signals (R) ausführt.

14. Verfahren nach Anspruch 8, weiterhin umfassend das Liefern des kombinierten digitalen Positionssignals und des digitalen Detektionssignals an einen Computer (20) und Anzeigen eines Bilds der abgetasteten Probe (10).

## Revendications

1. Microscope confocal muni d'un système pour traiter les signaux de balayage provenant du microscope confocal, comportant : un système d'éclairage (2) dirigeant un faisceau lumineux sur un spécimen (10), une unité de commande et de traitement (16) et un dispositif de balayage (6) ; où
l'unité de commande et de traitement (16) est munie d'une pluralité de dispositifs programmables pour le traitement en temps réel, d'au moins trois ports d'entrée (16₁, 16₂, 16₃) et d'un port de sortie (16₄) ;
un premier détecteur (12) reçoit la lumière provenant du spécimen (10) et génère un signal électrique analogique, qui est transmis à un premier convertisseur analogique-numérique (30₁) pour générer un premier signal numérique ;
un deuxième détecteur (14) reçoit la lumière provenant du système d'éclairage (2) et génère un deuxième signal électrique analogique, qui est transmis à un deuxième convertisseur analogique-numérique (30₂) pour générer un deuxième signal numérique ;
le dispositif de balayage (6) génère un signal de position qui est transmis à un troisième convertisseur analogique-numérique (30₃) pour générer un signal numérique de position ;
les premier et deuxième convertisseurs analogiques-numériques (30₁, 30₂) fournissent en sortie un signal qui est transmis aux premier et deuxième ports d'entrée (16₁, 16₂) de l'unité de commande et de traitement (16) via un premier et un deuxième modules de retard (32 et 34) et le signal de sortie du troisième convertisseur analogique-numérique (30₃) est relié au troisième port d'entrée (16₃) de l'unité de commande et de traitement (16) ; et
l'unité de commande et de traitement (16) comporte une unité de calcul, disposée pour corriger les fluctuations d'intensité du premier signal numérique en soustrayant le deuxième signal numérique du premier signal numérique et en générant ainsi un signal numérique de détection corrigé, et un tampon de ligne pour stocker en tampon le signal numérique de position, et ledit tampon de ligne étant disposé pour combiner le signal numérique de détection corrigé avec le signal numérique de position afin de fournir en sortie le signal combiné via le port de sortie unique.

2. Microscope confocal tel qu'exposé dans la revendication 1, où la pluralité de dispositifs programmables sont des réseaux de portes programmables sur le terrain.

3. Système tel qu'exposé dans la revendication 1, où l'unité de commande et de traitement (16) comporte une table de recherche d'adresses (63) pour donner une correction pour le signal de position (P) .

4. Microscope confocal tel qu'exposé dans la revendication 3, où le dispositif de balayage (6) comporte un système de miroirs de balayage (7) définissant une première trajectoire de balayage sur une surface de spécimen dans une direction x et une deuxième trajectoire de balayage dans une direction de sens opposé à la direction x, les première et deuxième trajectoires de balayage différant par rapport au temps, et la correction du signal de position (P) étant choisie par rapport au sens de balayage.

5. Microscope confocal tel qu'exposé dans la revendication 3, où une première table de recherche (43) réalise une conversion logarithmique du signal reçu du premier convertisseur analogique-numérique (30₁).

6. Microscope confocal tel qu'exposé dans la revendication 3, où une deuxième table de recherche (53) réalise une conversion logarithmique du signal reçu du deuxième convertisseur analogique-numérique (30₂).

7. Microscope confocal tel qu'exposé dans la revendication 1, comportant en outre un ordinateur (20) pour recevoir un signal numérique de position spécifique corrélé et le signal numérique de détection, l'ordinateur étant muni d'un affichage (22) pour donner une image du spécimen (10).

8. Procédé de traitement des signaux de balayage provenant d'un microscope confocal, le procédé comportant :
la génération d'au moins trois signaux analogiques (I, P, R), un premier signal (I) correspondant à la lumière reçue d'un spécimen (10), un deuxième signal (R) correspondant à une référence d'éclairage du microscope confocal et un signal de position (P) correspondant à un signal de position sur le spécimen (10) ;
la numérisation du premier signal, du deuxième signal et du signal de position pour donner des signaux numériques consistant en un premier signal numérique, un deuxième signal numérique et un signal numérique de position, respectivement ;
la mise en place d'une unité de commande et de traitement (16) recevant les signaux numériques au niveau des premier, deuxième et troisième ports d'entrée (16₁, 16₂, 16₃) respectivement, l'unité de commande et de traitement (16) étant munie d'une pluralité de dispositifs programmables pour le traitement en temps réel des signaux numériques ;
le stockage en tampon des signaux numériques de position dans un tampon de ligne de l'unité de commande et de traitement (16) ;
la correction des fluctuations d'intensité du premier signal numérique (I) en soustrayant le deuxième signal numérique (R) du premier signal numérique (I) et en générant ainsi un signal numérique de détection corrigé ;
la combinaison du signal numérique de détection corrigé avec le signal numérique de position pour donner un signal combiné ; et
la fourniture en sortie du signal combiné via un port de sortie unique.

9. Procédé tel qu'exposé dans la revendication 8, où l'étape de mise en place de l'unité de commande et de traitement (16) comporte une pluralité de dispositifs programmables et où les dispositifs programmables sont des réseaux de portes programmables sur le terrain.

10. Procédé tel qu'exposé dans la revendication 8, comportant en outre la réalisation d'une correction pour le signal numérique de position (P) en utilisant une table de recherche d'adresses (63) dans l'unité de commande et de traitement (16).

11. Procédé tel qu'exposé dans la revendication 10, où la réalisation de la correction du signal numérique de position est accomplie en corrigeant une première trajectoire de balayage sur une surface de spécimen dans une direction x et une deuxième trajectoire de balayage dans une direction x de sens opposé.

12. Procédé tel qu'exposé dans la revendication 8, où une première table de recherche (43) réalise une conversion logarithmique du premier signal numérique (I).

13. Procédé tel qu'exposé dans la revendication 8, où une deuxième table de recherche (53) réalise une conversion logarithmique du deuxième signal numérique (R).

14. Procédé tel qu'exposé dans la revendication 8, comportant en outre la transmission du signal numérique de position combiné et du signal numérique de détection à un ordinateur (20) ; et l'affichage d'une image du spécimen (10) balayé.
